Europäisches Patentamt

European Patent Office

Office européen des brevets

(19)

(11) Numéro de publication: **0 098 772**
**B1**

(12) **FASCICULE DE BREVET EUROPEEN**

(45) Date de publication du fascicule du brevet: **07.12.88**

(51) Int. Cl.⁴: **H 01 M 4/36,** H 01 M 6/18

(21) Numéro de dépôt: **83401311.2**

(22) Date de dépôt: **24.06.83**

(54) **Anodes composites et souples de pile au lithium en milieu non aqueux.**

(30) Priorité: **30.06.82 CA 406358**

(43) Date de publication de la demande:
**18.01.84 Bulletin 84/03**

(45) Mention de la délivrance du brevet:
**07.12.88 Bulletin 88/49**

(84) Etats contractants désignés:
**AT BE CH DE GB IT LI LU NL SE**

(56) Documents cités:
**EP-A-0 013 199**
**EP-A-0 078 505**
**FR-A-2 493 609**
**US-A-4 304 825**

(73) Titulaire: **SOCIETE NATIONALE ELF AQUITAINE**
**Tour Aquitaine**
**F-92400 Courbevoie (FR)**

(72) Inventeur: **Belanger, André**
**625, Rue Blain**
**Ste. Julie Quebec J0L 2C0 (CA)**
Inventeur: **Fauteux, Denis**
**73, Hauts Bois 319**
**Ste. Julie Quebec J0I 2S0 (CA)**
Inventeur: **Gauthier, Michel**
**237, Rue St. Ignace**
**La Prairie Quebec J5R 1E6 (CA)**

(74) Mandataire: **Boillot, Marc**
**SOCIETE NATIONALE ELF AQUITAINE Division**
**Propriété Industrielle Tour Elf**
**F-92078 Paris la Défense Cédex 45 (FR)**

Courier Press, Leamington Spa, England.

## Description

L'invention concerne des piles au lithium rechargeables ou non fonctionnant en milieu non aqueux à des températures ne dépassant généralement pas 175°C. Elle est due aux travaux de Messieurs André Belanger, Denis Fanteux et Michel Gauthier de l'Institut de Recherche de l'Hydro-Québec. Plus précisément l'invention se rapporte à la composition d'anodes composites flexibles, sources de lithium, réalisables sous forme de films minces et comportant les éléments suivants: un alliage ou composé intermétallique du lithium finement divisé, un matériau macromoléculaire plastique ou élastomérique à conduction ionique et un additif de carbone finement divisé. L'invention se rapporte à l'utilisation de ces anodes dans des générateurs électrochimiques notamment réalisables sous forme de films minces.

L'utilisation d'électrolytes polymères plastiques ou élastomériques a pour intérêt d'éliminer certains inconvénients des électrolytes liquides (convention, problèmes d'étanchéité . . .). Tout en contournant la difficulté majeure des électrolytes solides cristallins où vitreux, d'est-à-dire, la perte de contact entre l'électrolyte et les matériaux d'électrodes résultant des variations de volumes de électrodes lors du fonctionnement.

Le brevet européen 013199 de Michel Armand et Michel Duclot préconise l'emploi de matériaux élastomères solides à conduction ionique comme électrolyte dans un générateur électrochimique dont l'anode peut être constituée par un métal alcalin, un alliage ou un composé d'insertion susceptible de libérer un cation alcalin. Parmi les métaux alcalins, le lithium est paticulièrement intéressant. En outre, le brevet décrit la possibilité de réaliser une électrode négative composite comprenant l'électrolyte, la matière active et le cas échéant, au moins un composé inerte à conduction électronique.

La présente invention vise l'optimisation de la composition et du fonctionnement d'anodes composites, fonctionnant préférentiellement au lithium et utilisant de tels types de complexes polymériques (polymère solvatant + sel de lithium) comme électrolytes.

Le demanderesse a constaté que la réalisation de générateurs films minces de l'orde de 100 μm par cellule élémentaire pose certaines difficultés techniques d'élaboration du lithium métallique en films minces et de qualité suffisante pour être compatible avec des piles minces à électrolytes polymères. De plus, il a été constaté pour des piles rechargeables, que l'emploi du lithium métallique est limité à cause des problèmes de dendrites et de passivation des interfaces. Les efforts ont été dès lors orientés sur des alliages métalliques à haute activité de lithium, notamment le lithium-aluminium, le lithium-silicium et le lithium-bismuth.

Ces matériaux, broyables par des procédés usuels, présentent plusieurs caractéristiques qui les rendent particulièrement bien adaptés aux accumulateurs à polymères ioniques (films minces). On peut, en effet, élaborer à grande échelle des matériaux composites (alliage en poudre + électrolyte) par exemple à partir de suspension en milieu organique. Ces électrodes composites ont alors une grande surface spécifique, ce qui rend possible l'utilisation de matériaux d'électrodes dont les coefficients de diffusion du lithium sont relativement faibles.

De plus, l'utilisation de poudres d'alliages métalliques comporte plusieurs avantages dont entre autres:

— possibilité de mise en oeuvre de matériaux d'électrodes minces ($\leqq 100$ μm) par une multitude de techniques, notamment: pressage, saupoudrage, suspension, enduction, etc.);

— multiplication de la surface réelle du materiau actif en contact avec l'électrolyte et le collecteur de courant.

Le seul désavantage lié à l'utilisation des alliages de lithium tient au fait de l'abaissement du coeffient d'activite du lithium dans l'alliage, ce qui se traduit par une diminution du potentiel de l'électrode de 160 mV pour $Li_3Si$ et de 900 mV pour $Li_3Sb$ par rapport au lithium métallique.

Malheureusement, du côté anodique, la plupart des poudres d'alliages du lithium sont très réactives et se passivent très facilement malgré toutes les précautions prises au moment de leur manipulation. Il en résulte une multiplication des contacts résistifs inhérents aux poudres fines qui se traduit par une mauvaise distribution du potentiel dans la masse du matétiau avec comme résultat une mauvaise utilisation du lithium de l'électrode de l'ordre de 3%.

La description faite par Armand dans les demandes de brevet français mentionnées ci-dessus, ne permit pas toujours l'obention de matériau actif surtout à l'électrode négative. Ceci est particulièrement vrai pour les poudres d'électrodes négatives où l'on peut faire face constamment à des problèmes d'utilisation du lithium, qui semblent attriuables d'une part à la multiplication de contacts résistants inhérents aux poudres fines et d'autre part à la présence de couches passivantes à la surface des grains qui limitent le transport des matières actives aux interfaces.

Pour remedier à cette situation on a envisagé de changer la composition des matériaux d'anodes en y ajoutant divers additifs qui viennent modifier très appréciablement le comportement des électrodes composites comme source et récepteur de lithium.

Diverses techniques ont été proposées pour améliorer le fonctionnement des électrodes de lithium notamment du lithium-aluminium en sel fondu ou en milieu organique. Ces techniques mises au point dans le brevet U.S. 4 158 720 (électrode négative constituée de lithium-aluminium-fer), le brevet U.S. 4 130 500 (électrode négative constituée de lithium-aluminium-magnésium), le brevet U.S. 4 002 492 (anode constituée d'un alliage de lithium-aluminium aggloméré) et dans le brevet U.S. 3 957 532 (anode obtenue à partir d'un alliage de lithium- aluminium renfermant un treillis métallique) ne semblent pas contourner toutes les difficultés mentionnées ci-dessus.

Plus récemment, dans une étude portant sur divers additifs pour améliorer la perte de capacité du cyclage des élctrodes lithium-aluminium dans des accumulateurs à sels fondus, notamment dans un milieu LiCl—KCl, T. D. Kaun et William G. Reder (The Electrochem Soc., Spring Symp., 9 au 14 Mai 1982, Montréal, Québec, Canada, Abstract n° 345) mentionnent l'effet bénéfique, dans certains cas, de l'addition de 3 à 5% du volume de l'électrode d'une charge inerte qui est soit un semi-conducteur, du carbone, un isolant, MgO, ou un conducteur métallique, AlFe, tous en poudre d'environ 75 μm de diamètre.

Les améliorations au cyclage s'avèrent appréciables, mais on y gagne très peu ou pas sur l'utilisation. D'autre part, l'amélioration des performances semble liée, selon Kaun et Reder, à l'absence de frittage des poudres de lithium-aluminium lorsqu'on y ajoute du carbone, du MgO ou du AlFe. Les électrodes de Kaun et Reder sont différentes des électrodes selon la présente invention tant par leur formulation que par les conditions expérimentals où elles peuvent être utilisées: électrolyte fondu (400—500°C), frittage ou agglomération du lithium-aluminium lors du cyclage, proportions différentes, etc.

A basse température, comme c'est le cas lors de l'utilisation des électrodes selon la présente invention, il est évident que les problèmes de frittage sont inexistants, ou à la limite très peu significatifs. Par conséquent, l'addition de carbone dans le cas Kaun et coll. ne joue certainement pas un rôle équivalent à celui des électrodes selon la présente invention puisqu'en sels fondus, la substitution du carbone par MgO produit le même effect bénéfique.

D'autre part, des essais préliminaires sur l'addition de poudre de MgO au matériau d'électrode se sont avérés sans effet sur l'utilisation des matériaux d'électrode selon la présente invention. De même, l'addition de matériau conducteur électronique comme du nickel ou du cuivre en poudre, ne donne pas non plus d'amélioration intéressante quant à l'utilisation du lithium-alumi-nium. Au plus, ces additions permettent-elles d'élever à 5—6% l'utilisation du lithium-aluminium qui est normalement de 3% sans additif. On relie aisément cette amélioration à la meilleure conductivité du matériau.

Il a été réalisé selon la présente invention qu'il était possible de pallier au problème d'utilisation du lithium ou d'autres métaux alcalins, notamment le sodium découlant de l'usage de poudres fines élaborées en films minces (<50 μm) en ajoutant à la composition de l'électrode des particules de carbone, telles que le graphite ou les noirs, notamment les noirs d'acétylène qui contiennent peu d'impuretés susceptibles de réagir avec les alliages de lithium. On trouvera une bonne description et définition des noirs dans "Kirk-Othmer Encyclopedia of Chemical Techno-logy", vol. 4, pp. 243—282, Second Edition, 1967, John Wiley & Sons. On augmente ainsi très sensiblement l'utilisation du lithium (>50%) sans pénalité appréciable du point de vue du potentiel de la pile ou de la masse ajoutée. Le mécanisme expliquant cette amélioration demeure mal compris mais semble impliquer plus qu'une simple amélioration de la conductivité électronique du matériau d'électrode. La formation d'un composé d'insertion Li <C> pourrait être par exemple une des causes de l'effet observé.

Les inventeurs ont observé que dans les conditions de réalisation de l'anode selon la présente invention, les noirs peuvent insérer le lithium à des potentiels inférieurs à +1,2 volts vis-à-vis une électrode de lithium. Ils ont de plus remarqué que dans ces conditions, le coefficient global de diffusion du lithium dans l'anode est alors amélioré.

L'augmentation observée de la conductivité électronique des matériaux due à la présence de poudres de métaux, de graphite ou de noirs, est supérieure dans le cas de l'ajout des noirs, même pour des teneurs volumiques moindres, à cause de leur grande dispersion et/ou surface spécifique. Il a de plus été observé que les noirs permettent de quintupler et même de décupler, dans certains cas, l'utilisation du lithium du matériau d'électrode.

Bien que l'usage d'additifs tels que les noirs soit d'usage courant pour les électrodes positives afin d'améliorer la collection du courant et la distribution du potentiel, ce besoin ne se fait pas sentir généralement du côté de l'électrode négative lorsque des métaux ou des alliages sont utilisés. Ces derniers possèdent des conductivités électroniques suffisantes et ils sont généralement denses ou liés par pressage ou frittage. C'est le cas notamment lorsqu'on utilise par exemple l'alliage lithium-aluminium dans des batteries à sels fondus (U.S. 3.445.288) ou en milieu organique liquide (U.S. 4.002.492) où les électrodes sont généralement épaisses et rigides et par conséquent peu adaptables au concept d'accumulateurs en films minces.

Par ailleurs, compte tenu de la réaction possible entre le lithium et l'additif de carbone dans les conditions de réalisation de l'invention, il va de soi que l'usage d'un noir ou d'un graphite pré-intercalé de lithium entre dans le cadre de la présente invention.

L'invention est remarquable en ce qu'elle permet d'obtenir une électrode d'alliage de lithium de grande surface d'échange élaborable en film mince utilisant un électrolyte polymère liant et souple permettant le maintien des contacts au cyclage et amortissant les variations de volume des électrodes ainsi qu'un additif de carbone pour optimiser l'utilisation de la matière active en assurant les contacts et transferts ioniques et électroniques à l'intérieur de l'électrode composite, tout en assurant à l'ensemble de l'électrode composite le maintien de ses propriétés plastiques et élastomériques.

L'invention concerne donc une composition d'anode comprenant en combinaison le mélange suivant:

— un matèriau macromoléculaire plastique ou élastomérique à conduction ionique comportant en partie ou en totalité des homo- et/ou copolymères, dérivés d'un ou plusieurs monomères comportant un hétéro-atome, lequel est apte à solvater adéquatement le cation Li$^+$ et un sel de lithium,

— un alliage de lithium finement divisé de granulométrie inférieure à 40 μm et choisi de façon à ce que l'activité du lithium dans ledit alliage corresponde à des potentiels inférieurs à +1,2 volts vis-à-vis une électrode lithium,

— des particules d'un composé du carbone de formule: Li$_x$C ou $0 < x < 0,3$ lesdites particules du composé du carbone étant finement divisées à une granulométrie inférieure à 40 μm.

Le sel de lithium que l'on utilise de préférence est choisi dans le groupe constitué par LiClO$_4$, LiI, LiCF$_3$SO$_3$, LiSCN, LiBF$_4$, LiBO$_4$, LiPF$_6$, LiAsF$_6$, LiCF$_3$CO$_2$ et LiBH$_4$.

On peut aussi utiliser les sels du lithium décrit par F. C. Herkaoui, dans la thèse du 3e cycle, intitulé "Synthèses et études de nouveaux anions pour les électrolytes solides polymères". L'institut National Polytechnique de Grenoble, 1er Juin 1982. Par exemple, ces sels peuvent correspondre aux formules générales suivants:

$$Li_2B_nX_aY_b \qquad (I)$$

dans laquelle n est un nombre entier égal à l'une es valeurs 8, 10 et 12, X et Y sont identiques ou différents et représentent chacun un constituant choisi parmi l'hydrogène, les halogènes, le radical CN et les radicaux hydrocarbonés comportant notamment de 1 à 3 atomes de carbone, a et b sont des nombres entiers dont la somme est égale à n.

$$(R — C \equiv C)_4 \, X^-, Li^+ \qquad (II)$$

dans laquelle:
— X est un élément trivalent susceptible d'entrer en coordinance 4, choisi parmi le bore ou l'aluminium,
— les groupes R sont des radicaux hydrocarbonés aprotiques, c'est-à-dire des radicaux non donneurs de protons.

$$[A10_4 \, (SiR_3)_4]^- \, Li^+ \qquad (III)$$

dans laquelle les groupes R sont des radicaux hydrocarbonés aprotiques, c'est-à-dire des radicaux non donneurs de protons.

$$(C_nX_{2n+1}Y)_2N^-, Li^+ \qquad (IV)$$

dans laquelle:
— X est un halogène,
— n varie de 1 à 4,
— Y est un groupe CO ou SO$_2$.

Plus précisément, parmi les composés de formule (I) on utilisera de préférence Li$_2$B$_{12}$H$_{12}$, parmi les composés de formule II, on utilisera de préférence Li(C$_4$H$_9$—C$\equiv$C) B, parmi les composés de formule III, on utilisera de préférence le 1 tétrakis (triméthylsiloxy) alanate, parmi les composés du type (IV) on utilisera de préférence le bis (trifluorométhylacétyl) imidure de lithium et le bis (trifluorométhylsulfonyl) imidure de lithium.

De préférence, l'alliage de lithium est choisi dans le groupe constitué par:
— le lithium-aluminium,
— le lithium-silicium,
— le lithium-antimoine,
— le lithium-bismuth,
— le lithium-bore,
— le lithium finement divisé.

Selon la présente invention, les particules du composé du carbone sont de préférence choisies parmi le graphite pulvérisé et les noirs, et plus particuliérement les noirs d'acétylène.

Les particules de graphite varient habituellement entre 1 et 40 μm. Quant aux noirs ils sont généralement inférieurs à 1 μm, par exemple entre 0,02 μm et 1 μm.

Lorsqu'on utilise des particules du composé du carbone de formule Li$_x$C où $x \neq 0$, la valeur de x est habituellement voisine de 0,15.

En général, la composition selon l'invention comprend environ 15 à 70% en volume d'alliage, environ 5 à 40% en volume de particules du composé du carbone, la balance étant constituée par le matériau macromoléculaire plastique; de préférence environ 35 à 55% en volume d'alliage, environ 15 à 20% de particules de carbone, la balance étant constituée par le matériau macromoléculaire plastique.

Pour les exemples ci-dessous, l'électrolyte polymère le plus fréquemment utilisé est le polyoxyde d'éthylène de masse moléculaire élevée, par exemple 900 000 complexé avec un sel de lithium fréquement le LiClO$_4$ ou Li$_3$B$_{12}$H$_{12}$. La rapport oxygène/lithium du complexe formé avec le perchlorate est ultimement environ 8/1, quoique cet exemple ne soit pas limitatif.

Les exemples illustrant les performances des anodes composites résultant de l'invention ont été obtenus dans des générateurs complets utilisant un électrolyte de même nature, constitué d'un film d'environ 75—100 μm d'épaisseur et de cathodes composites contenant généralement TiS$_2$ ou V$_6$O$_{13}$ en quantités excédentaires relativement à l'alliage de lithium utilisé. Une composition de cathode fréquemment utilisée fut par exemple en volume:
40% TiS$_2$
17% graphite
43% complexe POE—LiClO$_4$ dans un rapport O/Li = 8

La cellule expérimentale utilisée pour l'obtention des exemples décrits ci-après, inclus une électrode de référence au lithium qui permet de suivre indépendamment l'évolution du potentiel de l'anode.

Les anodes utilisées dans ces exemples ont été obtenues principalement par les deux méthodes suivantes:
— pressage à chaud à une température supérieure au point de fusion du polymère des divers constituants en poudre fine;

— ou élaboration d'un film mince d'anode à l'aide des techniques usuelles de peinture ou d'imprimerie par mise en solution ou suspension de l'électrolyte polymère, de l'additif de carbone et de la poudre d'alliage dans des solvants compatibles, e.g. benzène, THF, dioxolane, etc., et l'évaporation et le séchage des films obtenus.

Il va de soi que toute autre méthode d'élaboration compatible avec les constituants des anodes décrites peut aussi être utilisée pour la fabrication des films.

Dans les dessins qui illustrent l'invention:

— la figure 1 est un schéma d'une pile incluant l'anode selon l'invention.

— la figure 2 illustre l'évolution du potentiel de l'anode au cours de la décharge en fonction de son utilisation dans le cas d'anodes ne contenant pas de particules d'un composé du carbone.

— la figure 3 illustre l'évolution du potentiel de l'anode au cours de la décharge en fonction de son utilisation dans le cas d'anodes contenant des particules d'un composé du carbone.

L'invention va maintenant être illustrée sans caractère limitatif par les exemples qui suivent, dans lequel les exemples 1, 2 et 3 concernent des anodes ne comprenant pas de carbone et ne sont donnés qu'à titre de comparaison.

### Exemple 1 (sans carbone)

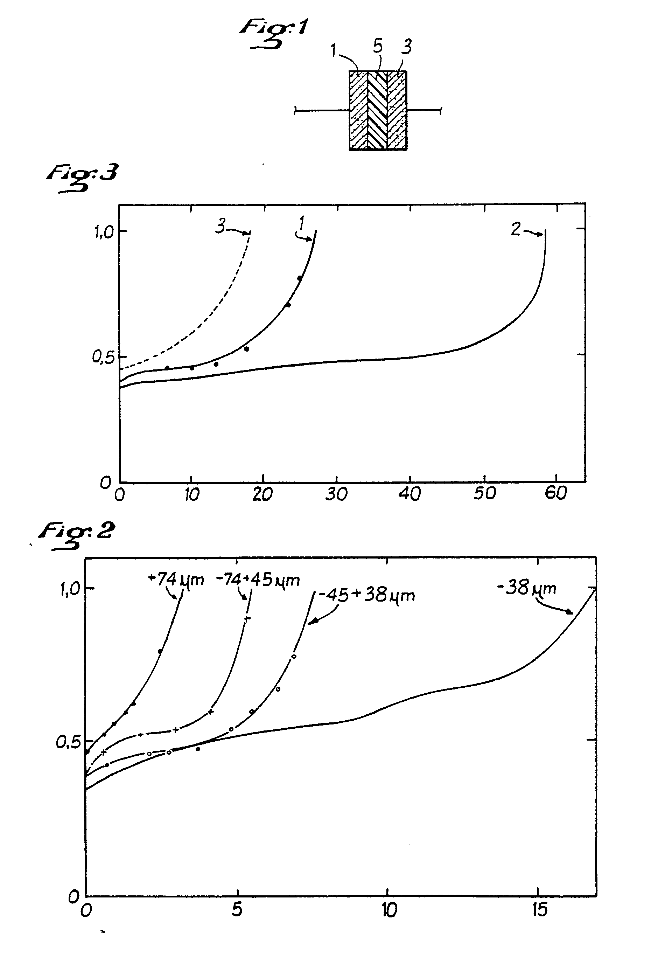

Le matériau constituant l'anode a été préparé de la façon suivante: 33 mg de LiAl pyrométallurgique (50% at. li) broyé et tamisé à — 45 µm, 22 mg de POE commercial en poudre et 11 mg de $LiClO_4$ commercial séché sous vide à 200°C pour une masse totale de 66 mg ont été mélangés au mortier dont 41 mg ont été pressés sur un disque mince d'acier inoxydable de 2,2 cm de diamètre (3,8 cm$^2$). Ce matériau contenant une quantité de lithium equivalent à 57°C (4 mg de lithium environ) a été monté à l'intérieur d'un générateur tel que décrit à la figure 1, où l'on voit l'anode 1 telle que décrite, la cathode 3 constituée de 40% volume $TiS_2$ (−38 µm), 17% volume de graphite (−38 µm) et 43% volume du complexe POE—$LiClO_4$ dans un rapport O/Li = 8, et où l'épaisseur ne dépasse généralement pas 75 µm et l'électrolyte solide 5 constitué d'une membrane élastomérique de 75 µm d'épaisseur formée du complexe POE—$LiClO_4$ dans un rapport O/Li = 8. On a porté le générateur à sa température d'opération, dans ce cas ci 112°C. On a ensuite procédé à la décharge de l'accumulateur à des courants variant entre 80 µA et 300 µA. La décharge est considérée terminé quand le potentiel de l'anode a atteint +1,2V relativement à une électrode de référence au lithium non illustrée sur les dessins: un total de 0,18 mg de lithium ont été oxydés, ce qui correspond à une utilisation de 4,3% du matériau.

### Exemple 2 (sans carbone)

Dans cet exemple, le matériau de l'anode à été fabriqué dans les proportions suivantes: 0.6 g de LiAl (46% at.) broyé et tamisé à — 38 µm ont été mélangés au mortier à 0,3 g de POE commercial de masse moléculaire 900.000 + 0,12 g de $LiClO_4$. De ce mélange, 56 mg ont été pressés sur un disque mince d'acier inoxydable et montés dans un générateur tel que celui décrit à l'exemple 1. A 112°C, l'accumulateur a été déchargé à 25 µA.cm$^{-2}$ pour un total de 7,4 Coulombs quand l'électrode a atteint un potentiel de + IV vs une électrode référence au lithium.

L'utilisation du matériau est alors de 8% (contenu de l'électrode: une quantité de lithium èquivalent à 92 Coulombs) (environ 6.46 mg). Un essai semblable réalisé avec du LiAl (75% at.) dans les proportions suivantes (0.58 g de LiAl, 0,30 g de POE + 0,15 g de $LiClO_4$) a donné un taux d'utilisation un peu plus faible soit 6% (12 Coulombs sur 186 Coulombs présents) (équivalant à 0.84 mg de lithium sur 13.05 mg présent) mais à courant de décharge de 130 µA. cm$^{-2}$.

### Exemple 3 (sans carbone)

Dans cet exemple, les électrodes composites ont été élaborées sur des disques minces d'acier inoxydable de 4 cm$^2$ et avaient la composition suivante: 80% poids, soit 40 mg de lithium aluminium pyrométallurgique contenant 50% at. de lithium et 20% poids, soit 10 mg de poly (oxyde d'éthylène) + 5 mg de $LiClO_4$. Divers assemblages ont été réalisés selon la composition décrite, avec des poudres de lithium aluminium de granulométres variées. Les comportements observés à la décharge des anodes ainsi assemblées avec des électrolytes et des cathodes identiques à l'exemple 1 pour un potentiel final de 1,0 volt versus le lithium métallique, une densité de courant de 25 µA/cm$^2$ et une température voisine de 105°C sont illustrés à la figure 2 et montre l'influence de la granulométrie du lithium-aluminium.

### Exemple 4 (avec et sans carbone)

Dans cet essai, des anodes contenant du lithium ont été préparées à partir d'alliage LiSi (44% en poids de lithium) acheté commercialement. Les proportions utilisées ont été les suivantes: 540 mg de LiSi (−38 µm) et 270 mg de POE de masse moléculaire 900.000 + 130 mg de $LiClO_4$. Après avoir réalisé un mélange intime des deux constituants, 43 mg ont, été pressés sur un support métallique, pour un contenu de lithium équivalant à 173 Coulombs (environ 12.5 g) sur l'électrode. Dans le deuxième montage, on ajouté au matérieu du graphite dans les proportions suivantes: 180 mg de LiSi (< 38 µm) 50 mg de graphite (< 38 µm) et 120 mg de POE en poudre (masse moléculaire 900.000) + 50 mg de $LiClO_4$ duquel, une fois les poudres mélangées, un échantillon de 42 mg à été pressé sur un support métallique identique à celui décrit ci-haut. La capacité de l'électrode est une quantité de lithium equivalent à 130 Coulombs (environ 9.4 g). Ces deux anodes ont été montées dans des générateurs et déchargées dans des conditions expérimentales très voisines (temp. = 104°C, courant = 130 µA.cm$^{-2}$). Dans le premier cas, 6% du contenu en lithium ont pu être utilisés alors que dans le deuxième cas (en présence de graphite) 17% du matériau furent actifs en lithium. D'autres essais ont montré que la présence de graphite dans des proportions variant de 5—30% volume pouvait doubler et parfois tripler l'utilisation des alliages de lithium.

Exemple 5 (avec carbone)

Dans cet exemple, des anodes composites de lithium aluminium (50% at. de lithium), d'additif de carbone et de polyéther ont été préparées selon les proportions suivantes:

1 — 51% poids, soit 2,15 g de poudre de LiAl tamisée à — 38 µm et 9,5% poids, soit 0,40 g de poudre de graphite tamisée à — 38 µm ont été intimement mélangées. De ce mélange 1,44 g est prélevé et ajouté au liant qui était un POE de masse 900.000. Le rapport massique du matériau actif plus additif versus le liant était de 4. Ce matériau a été déposé sur un support d'acier inoxydable de 4 cm$^2$.

2 — 68% poids, soit 2,00 g de poudre de LiAl tamisée à — 38 µm et 10% poids, soit 0,30 g de poudre de noir de Shawinigan de granulométrie inférieure à 1 µm ont été intimement mélangées. De ce mélange 1,15 g est prélevé et ajouté au liant qui étant du POE (900.000). Le rapport massique du matériau actif plus additif versus le liant était de 3,8. Ce matériau a été déposé sur un support d'acier inoxydable de 4 cm$^2$.

Deux générateurs ont été montés et les anodes déchargées dans les conditions suivantes: 110°C, 25 µA/cm$^2$. Dans les deux cas des utilisations supérieures à celles obtenues pour des poudres de LiAl ne contenant pas d'additif ont été observées et sont présentées à la figure 3, où la courbe 3 est reprise de l'exemple 3 à titre de référence. De l'anode 1 contenant du graphite environ 28% du contenu en lithium a été utilisé, l'anode 2 contenant du noir environ 57% du contenu en lithium a été utilisé.

Exemple 6 (avec carbone)

En utilisant la technique de l'exemple 5 (a) mais en remplaçant la perchlorate de lithium par l'iodure de lithium, le Li$_2$B$_{12}$H$_{12}$ ou le LiCF$_3$SO$_3$ on a obtenu les mêmes résultats.

**Revendications**

1. Composition d'anode comprenant en combinaison le mélange suivant:
— un matériau macromoléculaire plastique ou élastomérique à conduction ionique comportant en partie ou en totalité des homo- et/ou copolymères, dérivés d'un ou plusieurs monomères comportant un hétéro-atome, lequel est apte à solvater adéquatement le cation Li$^+$ et un sel de lithium,
— un alliage de lithium finement divisé de granulométrie inférieure à 40 µm et choisi de façon à ce que l'activité du lithium dans ledit alliage corresponde à des potentiels inférieurs à + 1,2 volts vis-à-vis une électrode lithium,
— des particules d'un composé du carbone de formule: Li$_x$C ou $0 < x < 0,3$ lesdites particules du composé du carbone étant finement divisées à une granulométrie inférieure à 40 µm.

2. Composition selon la revendication 1, dans laquelle le sel de lithium est choisi dans le groupe constitué par LiClO$_4$, LiI, LiCF$_3$SO$_3$, LiSCN, LiBF$_4$, LiB$_4$, φµ$_4$, LiPF$_6$, LiAsF$_6$, LiCF$_3$CO$_2$ et LiBH$_4$.

3. Composition selon la revendication 1, dans laquelle le sel de lithium est choisi dans le groupe constitué par les sels de formule générale (I):

$$Li_2B_nX_aY_b \qquad (I)$$

dans laquelle n est un nombre entier égal à l'une des valeurs 8, 10 et 12, X et Y sont identiques ou différents et représentent chacun un constituant choisi parmi l'hydrogène, les halogènes, le radical CN et les radicaux hydrocarbonés comportant notamment de 1 à 3 atomes de carbone, a et b sont des nombres entiers dont la somme est égale à n.

4. Composition selon la revendication 1, dans laquelle le sel de lithium est choisi dans le groupe constitué par les sels de formule générale:

$$(R - C \equiv C)_4 \, X^-, \, Li^+ \qquad (II)$$

dans laquelle:
— X est un élément trivalent susceptible d'entrer en coordinance 4, choisi parmi le bore ou l'aluminium,
— les groupes R sont des radicaux hydrocarbonés aprotiques, c'est-à-dire des radicaux non donneurs de protons.

$$[A1O_4 \, (SiR_3)_4]^- \, Li^+ \qquad (III)$$

dans lequelle les groupes R sont des radicaux hydrocarbonés aprotiques, c'est-à-dire des radicaux non donneurs de protons.

$$(C_nX_{2n+1}Y)_2N^-, \, Li^+ \qquad (V)$$

dans laquelle:
— X est un halogène,
— n varie de 1 à 4,
— Y est un groupe CO ou SO$_2$.

5. Composition selon la revendication 3 dans laquelle le sel de lithium est le:

$$Li_2B_{12}H_{12}$$

6. Composition selon la revendication 4, dans laquelle le sel de lithium est choisi dans le groupe constitué par le Li(C$_4$H$_9$ − C ≡ C)$_4$ B, le 1 tétrakis (triméthylsiloxy) alanate de lithium, le bis (trifluorométhyl-acétyl) imidure de lithium et le bis (trifluorométhyl-sulfonyl) imidure de lithium.

7. Composition selon la revendication 1, dans lequel l'alliage de lithium est choisi dans le groupe constitué par:
— le lithium-aluminium,
— le lithium-silicium,
— le lithium-antimoine,
— le lithium-bismuth,
— le lithium-bore.

8. Composition selon la revendication 1, dans laquelle le carbone du composé $Li_xC$ provient de noirs de granulométrie variant entre 0,02 µm à 1 µm.

9. Composition selon la revendication 1, dans laquelle le carbone du composé $Li_xC$ provient de particules de graphite de granulométrie variant entre 1 et 40 µm.

10. Composition selon la revendication 8, dans laquelle les noirs sont choisis parmi les noirs acétyléniques.

11. Composition selon la revendication 1, dans laquelle les particules d'un composé du carbone sont constituées par du $Li_xC$ où x est sensiblement égal à 0,15.

12. Composition selon la revendication 1, renfermant environ 15 à 70% en volume d'alliage, environ 5 à 40% en volume de particules d'un composé du carbone, la balance étant constitué par le matériau macromoléculaire plastique ou élastomérique à conduction ionique.

13. Composition selon la revendication 1, renfermant environ 35 à 55% en volume d'alliage, environ 15 à 20% de particules d'un composé du carbone, la balance étant constituée par le matériau macromoléculaire plastique ou élastomérique à conduction ionique.

14. Anode pour cellule électrochimique constituée par un collecteur de courant sur lequel est déposé un film de composition telle que définie dans les revendications 1, 2 ou 3, l'épaisseur totale de l'anode ne dépassant pas 75 µm.

**Patentansprüche**

1. Anodenmasse, die in Kombination die folgende Mischung enthält:
— ein makromolekulares plastisches oder elastomeres Material zur Ionenleitung, das zum Teil oder im Ganzen Homo- und/oder Copolymere aufweist, die von einem oder mehreren Monomeren mit einem Heteroatom stammen, und das entsprechend das Kation $Li^+$ und ein Lithiumsalz zu lösen vermag,
— eine fein zerteilte Lithiumlegierung mit einer Korngröße von unter 40 µm, die derart ausgewählt wird, daß die Wirksamkeit des Lithiums in besagter Legierung derjenigen mit Potentialen von unter +1,2 Volt gegenüber der Lithiumelektrode entspricht,
— Teilchen einer Kohlenstoffverbindung mit der Formel: $Li_xC$ oder $< x < 0,3$, wobei die besagten Teilchen der Kohlenstoffverbindung zu einer Korngröße von unter 40 µm fein zerteilt sind.

2. Masse nach Anspruch 1, dadurch gekennzeichnet, daß das Lithiumsalz aus der Gruppe $LiClO_4$, $LiI$, $LiCF_3SO_3$, $LiSCN$, $LiBF_4$, $LiB\phi_4$ $LiPF_6$, $LiAsF_6$, $LiCF_3CO_2$ und $LiBH_4$ ausgewählt ist.

3. Masse nach Anspruch 1, dadurch gekennzeichnet, daß das Lithiumsalz aus der Gruppe der Salze mit der allgemeinen Formel

$$Li_2B_nX_aY_b \qquad (I)$$

ausgewählt ist, wobei n eine ganze Zahl ist, die einigen der Werte 8, 10 und 12 entspricht, X und Y identisch oder Verschieden sind und jedes ein Bestandteil, ausgewählt aus Wasserstoff, den Halogenen, dem Rest CN und den Kohlenwasserstoffresten, die im besonderen 1 bis 3 Kohlenstofatome aufweisen, ist, und daß a und b ganze Zahlen sind, deren Summe gleich n ist.

4. Masse nach Anspruch 1, dadurch gekennzeichnet, daß das Lithiumsalz aus der Gruppe der Salz mit der allgemeinen Formel

$$(R - C \equiv C)_4\, X^-, Li^+ \qquad (II)$$

ausgewählt ist, wobei
— X ein dreiwertiges Element ist, das eine vierwertige Verbindung eingehen kann und aus Bor oder Aluminium ausgewählt ist;
— die Gruppen R aprotische Kohlenwasserstoffreste sind, d.h., keine protonengebenden Reste

$$[AlO_4\,(SiR_3)_4]^-Li^+ \qquad (III)$$

wobei die Gruppen R aprotische Kohlenwasserstoffreste sind, d.h., keine protongegenden Reste

$$(C_nX_{2n+1}Y)_2N^-, Li^+ \qquad (IV)$$

wobei
— X ein Halogen ist,
— n zwischen 1 und 4 variiert,
— Y eine Gruppe aus CO oder $SO_2$ ist.

5. Masse nach Anspruch 3, dadurch gekennzeichnet, daß das Lithiumsalz

$$Li_2B_{12}H_{12}$$

ist.

6. Masse nach Anspruch 4, dadurch gekennzeichnet, daß das Lithiumsalz aus der Gruppe $Li(C_4H_9 - C \equiv C)_4$ B, dem 1 Tetrakis-(trimethylsiloxy)-lithiumalanat, dem bis(Trifluoromethyl-acetyl)-lithiumimid und dem bis(Trifluoromethyl-sulfonyl)-lithiumimid ausgewählt ist.

7. Masse nach Anspruch 1, dadurch gekennzeichnet, daß das Lithiumlegierung aus der Gruppe
— Lithiumaluminium,
— Lithiumsilizium,
— Lithiumantimon,
— Lithiumbismuth,
— Lithiumbor
ausgewählt ist.

8. Masse nach Anspruch 1, dadurch gekennzeichnet, daß der Kohlenstoff der Verbindung $Li_xC$ aus Ruß mit einer Kornghröße zwischen 0,02 µm und 1 µm stammt.

9. Masse nach Anspruch 1, dadurch gekennzeichnet, daß der Kohlenstoff der Verbindung $Li_xC$ von Graphitpartikeln mit einer Korngröße zwischen 1 und 40 µm stammt.

10. Masse nach Anspruch 1, dadurch gekennzeichnet, daß der Ruß aus der Gruppe des Acetylenrußes stammt.

11. Masse nach Anspruch 1, dadurch gekennzeichnet, daß die Teilchen einer Kohlenstoffverbindung $Li_xC$ darstellen, wobei x etwa gleich 0,15 ist.

12. Masse nach Anspruch 1, dadurch gekennzeichnet, daß sie ca. 15 bis 70 Volumen-% Leigerung, ca. 5 bis 40 Volumen-% an Teilchen einer Kohlenstoffverbindung umfaßt, wobei der Rest auf das makromolekulare plastische oder elastomere Material zur Ionenleitung fällt.

13. Masse nach Anspruch 1, dadurch gekennzeichnet, daß sie ca. 35 bis 55 Volumen-% Leigerung, ca. 15 bis 20 Volumen-% an Teilchen einer Kohlenstroffverbindung umfaßt, wobei der Rest auf das makromolekulare plastische oder elastomere Material zur Ionenleitung fällt.

14. Anode für eine eletrochemische Zelle, bestehend aus einem Stromsammler auf dem ein Film mit der Zusammensetzung wiein Ansprüchen 1, 2 oder 3 beschrieben, aufgebracht ist, und die Gesamtstärke der Anode 75 µm nicht übersteigt.

## Claims

1. Anode composition comprising the following combination of ingredients:

— a plastic or elastomeric macromolecular material with ionic conduction including, partly or wholly, homo- and/or copolymers, derived from one or more monomers having a hetero-atom which can adequately dissolve the cation $Li^+$ and a salt of lithium,

— a finely divided alloy of lithium having a granulometry lower than 40 mµ and selected so that the lithium activity in said alloy corresponds to potentials which are lower than + 1.2 volts with respect of a lithium electrode, and

— particles of a carbon compound of the formula $Li_xC$ where $0 < x < 0.3$, said particles of the carbon compound being finely divided to a granulometry lower than 40 µm.

2. A composition according to claim 1, wherein the salt of lithium is selected from the group consisting of $LiClO_4$, LiI, $LiCF_3SO_3$, LiSCN, $LiBF_4$, $LiB\phi_4$, $LiPF_6$, $LiAsF_6$, $LiCF_3CO_2$ et $LiBH_4$.

3. A composition according to claim 1, wherein the salt of lithium is selected from the group consisting of salts of the general formula (I):

$$Li_2B_nX_aY_b \qquad (I)$$

in which n is a whole number which is equal to 8, 10 or 12, X and Y are the same or different and each represents a member selected from hydrogen, halogens, the radical CN and the hydrocarbon radicals having 1 to 3 carbon atoms, a and b are whole numbers the sum of which is equal to n.

4. A composition according to claim 1, wherein the salt of lithium is selected from the group consisting of salts of the general formulae

$$(R - C \equiv C)_4 \, X^-, \, Li^+ \qquad (II)$$

in which:

— X is a trivalent element which can have a coordination number of 4, selected from boron or aluminium,

— the groups R are aprotic hydrocarbon radicals, which are radicals which do not yield protons,

$$[AlO_4 \, (SiR_3)_4]^- \, Li^+ \qquad (III)$$

in which the groups R are aprotic hydrocarbon radicals, which are radicals which do not yield protons,

$$(C_nX_{2n+1}Y)_2 \, N^-, \, Li^+ \qquad (IV)$$

in which:

— X is a halogen,

— n varies from 1 to 4,

— Y is a CO or $SO_2$ group.

5. A composition according to claim 3, wherein the salt of lithium is $Li_2B_{12}H_{12}$.

6. A composition according to claim 4, wherein the salt of lithium is selected from the group consisting of $Li(C_4H_9 - C \equiv C)_4\,B$, lithium 1 tetrakis (trimethylsiloxy) alanate, lithium bis (trifluoromethylacetyl) imide and lithium bis (trifluoromethylsulfonyl) imide.

7. A composition according to claim 1, wherein the salt of lithium is selected from the group consisting of:
lithium-aluminium,
lithium-silicium,
lithium-anitmony,
lithium-bismuth,
lithium-boron.

8. A composition according to claim 1, wherein the carbon of the compound $Li_xC$ originates from carbon blacks having a granulometry between 0.02 µm and 1 µm.

9. A composition according to claim 1, wherein the carbon of the compound $Li_xC$ originates from graphite particles having a granulometry between 1 and 40 µm.

10. A composition according to claim 8, wherein the carbon blacks are selected from acetylenic blacks.

11. A composition according to claim 1, wherein the particles of carbon compound consist of $Li_xC$ where x is substantially equal to 0.15.

12. A composition according to claim 1, comprising about 15 to 70 volume % of alloy, about 5 to 40 volume % of particles of the carbon compound, the balance comprising the plastic or elastomeric macromolecular material with ionic conduction.

13. A composition according to claim 1, comprising about 35 to 55 volume % of alloy, about 15 to 20% of particles of the carbon compound, the balance comprising the plastic or elastomeric macromolecular material with ionic conduction.

14. An anode for an electrochemical cell consisting of a current collector on which is deposited a film of a composition as defined in claims 1, 2 or 3, the total thickness of the anode not exceeding 75 µm.

*Fig:1*

*Fig:3*

*Fig:2*